(19) Europäisches Patentamt / European Patent Office / Office européen des brevets

(11) **EP 3 547 009 A1**

(12) **DEMANDE DE BREVET EUROPEEN**

(43) Date de publication:
02.10.2019 Bulletin 2019/40

(51) Int Cl.:
*G02B 27/28* (2006.01)　　　*F21S 41/135* (2018.01)
*F21S 43/20* (2018.01)　　　*F21S 41/64* (2018.01)

(21) Numéro de dépôt: **19165338.5**

(22) Date de dépôt: **26.03.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **29.03.2018　FR 1852727**

(71) Demandeur: **Valeo Vision**
**93012 Bobigny Cedex (FR)**

(72) Inventeurs:
• SATHAYE, Kedar
  93012 BOBIGNY Cedex (FR)
• PETIT, Julia
  93012 BOBIGNY Cedex (FR)
• NEVEU, Sébastien
  93012 BOBIGNY Cedex (FR)

(74) Mandataire: **Valeo Vision**
**IP Department**
**34, rue Saint André**
**93012 Bobigny (FR)**

(54) **DISPOSITIF DE SIGNALISATION LUMINEUSE AVEC ECRAN LCD**

(57)　L'invention a trait à un module de signalisation lumineuse, notamment pour véhicule automobile (2), comprenant un écran à cristaux liquides (14) avec une face arrière (14.1) et une face avant (14.2) ; un panneau de rétroéclairage (16) disposé en vis-à-vis de la face arrière (14.1) de l'écran à cristaux liquides (14), configuré pour rétroéclairer l'écran à cristaux liquides (14) en vue de former, par transmission au travers dudit écran, une image lumineuse ; et un dispositif optique de dépolarisation, par exemple un diffuseur (24), en vis-à-vis de la face avant (14.2) de l'écran à cristaux liquides (14), configuré pour annuler une polarisation rectiligne de l'image lumineuse générée par l'écran à cristaux liquides (14).

Fig. 2

EP 3 547 009 A1

Printed by Jouve, 75001 PARIS (FR)

**Description**

L'invention a trait au domaine de la signalisation lumineuse, plus particulièrement la signalisation lumineuse pour véhicule automobile.

Le document de brevet publié sous le numéro FR 3 026 689 A1 divulgue un dispositif de signalisation lumineuse, en l'occurrence un feu arrière, pour véhicule automobile, configuré pour afficher un pictogramme sur une zone d'un écran d'affichage. Le pictogramme est produit par un premier module lumineux pouvant comprendre un microsystème électromécanique à matrice de miroirs apte à être commandé et produire différents pictogrammes. Selon une variante, le premier module peut être un écran à cristaux liquides (LCD). Le dispositif peut également comprendre un deuxième module lumineux configuré pour éclairer une autre zone de l'écran d'affichage, distincte de la zone affichant le pictogramme. Un tel dispositif est intéressant en ce qu'il permet d'afficher des pictogrammes sur la surface lumineuse d'un feu de signalisation, en l'occurrence un feu arrière de véhicule automobile.

De manière générale, les écrans à cristaux liquides utilisent la polarisation de la lumière par des filtres polarisants et la biréfringence de certains cristaux liquides en phase nématique, dont on peut faire varier l'orientation en fonction du champ électrique. Un écran à cristaux liquides est constitué de deux polariseurs dont les directions de polarisation forment un angle de 90°, disposés de chaque côté d'un sandwich, formé de deux plaques de verre enserrant des cristaux liquides. Les deux faces internes des plaques de verres comportent une matrice d'électrodes transparentes pour le noir et blanc. Pour les écrans couleur, le principe de base est le même, il nécessite cependant trois cellules par pixels et le sandwich est complété par un filtre coloré de motifs rouges, verts et bleus.

Il s'ensuit que la lumière d'un module lumineux utilisant un écran à cristaux liquides est polarisée suivant une direction donnée, définie par le filtre polarisant de sortie de l'écran. L'utilisation de lunettes polarisantes par un observateur peut alors conduire à une occultation totale de l'image lumineuse lorsque la direction de polarisation de ladite image est perpendiculaire à la direction de polarisation des lunettes. Cette dernière est habituellement verticale, essentiellement pour filtrer les réflexions des rayons solaires sur des surfaces vitreuses, comme par exemple sur la surface d'une étendue d'eau, cette réflexion ayant pour effet de polariser la lumière suivant une direction parallèle à la surface de l'eau. Aussi, les écrans à cristaux liquides d'affichage, notamment sur les tableaux de bord de véhicules, présentent habituellement une direction de polarisation inclinée à 45°. Un observateur porteur de lunettes polarisantes verticalement va cependant percevoir l'image produite par un tel écran avec une perte de luminosité importante, à savoir de l'ordre de 50%.

Dans le domaine de la signalisation lumineuse, plus particulièrement lorsque celle-ci a un impact direct sur la sécurité des personnes, comme c'est le cas dans la signalisation lumineuse pour véhicule automobile, l'utilisation d'écrans à cristaux liquides peut présenter des défauts de perception par des observateurs porteurs de lunettes polarisantes.

L'invention a pour objectif de pallier au moins un des inconvénients de l'état de la technique susmentionné. Plus particulièrement, l'invention a pour objectif d'éviter des défauts de perception d'images lumineuses produites par un module lumineux utilisant un écran à cristaux liquides.

L'invention a pour objet un module de signalisation lumineuse, notamment pour véhicule automobile, comprenant un écran à cristaux liquides avec une face arrière et une face avant ; un panneau de rétroéclairage disposé en vis-à-vis de la face arrière de l'écran à cristaux liquides, configuré pour rétroéclairer l'écran à cristaux liquides en vue de former, par transmission au travers dudit écran, une image lumineuse ; remarquable en ce que le module comprend, en outre, un dispositif optique de dépolarisation en vis-à-vis de la face avant de l'écran à cristaux liquides configuré pour annuler une polarisation rectiligne de l'image lumineuse générée par l'écran à cristaux liquides.

Avantageusement, le dispositif optique de dépolarisation est un dépolaris eur.

Avantageusement, le panneau de rétroéclairage s'étend sur au moins 80% de la face arrière de l'écran à cristaux liquides. Avantageusement, le panneau de rétroéclairage comprend des sources lumineuses réparties de manière homogène sur son étendue. Avantageusement, le panneau de rétroéclairage est situé à distance de la face arrière de l'écran à cristaux liquides.

Avantageusement, l'image lumineuse comprend des pictogrammes.

Selon une première variante de l'invention, le dispositif optique de dépolarisation est un diffuseur de lumière.

Selon un mode avantageux de l'invention, le diffuseur de lumière forme un écran transparent ou translucide avec une face d'entrée et une face de sortie, au moins l'une desdites faces présentant un relief avec des microstructures.

Selon un mode avantageux de l'invention, la face de l'écran transparent ou translucide présentant un relief avec des microstructures est la face de sortie.

Selon un mode avantageux de l'invention, le diffuseur de lumière est du type circulaire.

Selon un mode avantageux de l'invention, le diffuseur de lumière présente un angle de diffusion supérieur ou égal à 30°.

Selon un mode avantageux de l'invention, le diffuseur de lumière est du type elliptique.

Selon un mode avantageux de l'invention, le diffuseur de lumière présente un petit angle de diffusion supérieur ou égal à 10° et/ou un grand angle de diffusion supérieur ou égal à 60°.

Selon un mode avantageux de l'invention, le diffuseur de lumière comprend un film ou un écran, transparent ou translucide, collé ou plaqué sur la face avant de l'écran à cristaux liquides ou tendu sur un cadre disposé à distance de la face avant de l'écran à cristaux liquides.

Selon une autre variante de l'invention, le dispositif optique de dépolarisation est une lame à retard quart d'onde.

Avantageusement, l'image lumineuse correspond à une fonction de lanterne pour véhicule automobile.

L'invention a également pour objet un dispositif lumineux comprenant un boîtier avec une ouverture ; une glace fixée au boîtier de manière à fermer l'ouverture ; au moins un module de signalisation lumineuse ; remarquable en ce que le ou un des modules de signalisation lumineuse est conforme à l'invention.

Avantageusement, le dispositif lumineux est un feu arrière de véhicule automobile.

Les mesures de l'invention sont intéressantes en ce qu'elles assurent une bonne perception de l'image lumineuse produite par le module, et ce en particulier lorsque l'observateur porte des lunettes polarisantes, indépendamment de l'orientation des lunettes en question par rapport à la direction de polarisation du filtre polarisant de sortie de l'écran à cristaux liquides.

D'autres caractéristiques et avantages de la présente invention seront mieux compris à l'aide de la description et des dessins parmi lesquels :

- La figure 1 est une illustration d'un feu de signalisation arrière d'un véhicule apte à produire des images lumineuses au moyen d'un écran à cristaux liquides, comprenant un module lumineux conforme à l'invention et formant un dispositif lumineux conforme à l'invention ;

- La figure 2 est une vue schématique en coupe du dispositif lumineux de la figure 1.

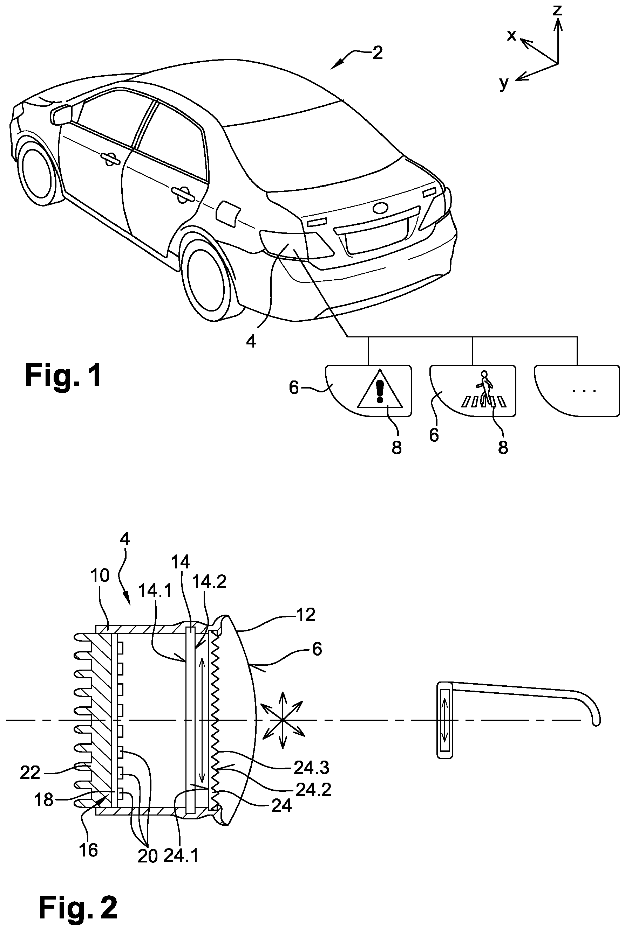

La figure 1 illustre un véhicule 2 équipé de deux feux arrière 4 comprenant, chacun, un module de signalisation conforme à l'invention. Les feux arrière 4 sont configurés pour former sur leur surface extérieure 6 des images lumineuses formant des pictogrammes 8. Ces pictogrammes peuvent notamment indiquer aux personnes situées à l'arrière du véhicule 2 certaines informations telles que la présence d'un danger ou encore le fait qu'un piéton est en train de traverser la route à l'avant du véhicule en question. Il est entendu que les pictogrammes peuvent prendre d'autres formes que celles illustrées et renseigner sur d'autres situations que celles illustrées.

La figure 2 est une vue schématique en coupe horizontale du feu arrière gauche de la figure 1, étant entendu que le feu arrière droit est généralement symétrique au feu arrière gauche.

Le feu arrière 4 comprend un boîtier 10 avec une ouverture refermée par une glace 12 formant la surface de sortie 6 du feu arrière. Le boîtier 10 en question loge un module de signalisation lumineuse constitué essentiellement d'un écran à cristaux liquides 14, d'un panneau de rétroéclairage 16 et d'un dispositif optique de dépolarisation, ici sous la forme d'un diffuseur de lumière 24.

Plus spécifiquement, l'écran à cristaux liquide 14 comprend une face arrière 14.1 et une face avant 14.2. Le panneau de rétroéclairage 16 est quant à lui constitué essentiellement d'une platine 18 et de sources lumineuses 20 disposées sur une face de la platine disposée en vis-à-vis de la face arrière 14.1 l'écran à cristaux liquides 14. Un dissipateur de chaleur 22, pouvant prendre la forme d'un radiateur avec des ailettes de refroidissement, peut être disposé sur la face opposée de la platine 18, en vue d'assurer un refroidissement des sources lumineuses 20. Ces dernières sont avantageusement des diodes à électroluminescence.

Selon une première variante de réalisation, le dispositif optique de dépolarisation selon l'invention est un diffuseur de lumière 24. Il forme un écran en matériau transparent ou translucide disposé en vis-à-vis de la face avant 14.2 de l'écran à cristaux liquides 14. Il comprend une face d'entrée 24.1 et une face de sortie 24.2 pour la lumière. L'une des faces en question, dans le cas présent la face de sortie 24.2, présente un relief avec des microstructures 24.3. Celles-ci sont volontairement représentées de manière agrandie, à des fins de clarté d'exposé, étant entendu qu'elles sont en réalités sensiblement plus petites, à savoir de l'ordre du micromètre. Ces microstructures sont assimilables à des micro-prismes aptes à dévier, par réfraction et dans différentes directions, les rayons lumineux qui les rencontrent. Par voie de conséquence, les rayons lumineux sortant de la face avant 14.2 de l'écran à cristaux liquides, polarisés de manière linéaire suivant la direction de polarisation du filtre polarisateur de sortie de l'écran, sont alors dépolarisés au travers du dispositif diffuseur de lumière 24. De cette façon, un observateur muni de lunettes polarisantes, indépendamment de l'orientation de la direction de polarisation, pourra percevoir l'image lumineuse avec très peu de perte de luminosité. En effet, parmi les différentes ondes lumineuses émises et transmises, seules les composantes perpendiculaires à la direction de polarisation des lunettes seront recalées par lesdites lunettes, toutes les composantes parallèles à la direction de polarisation ne subissant aucune absorption.

Le diffuseur de lumière 24 est avantageusement un film en matériau plastique transparent ou translucide, tel que du polycarbonate (PC) ou du polyester (PE), formant un substrat sur lequel une résine époxy est déposée et sur laquelle le relief est imprimé. De tels films sont commercialement disponibles notamment auprès de la société Luminit®. Ils peuvent présenter une épaisseur supérieure ou égale à 0.1mm et/ou inférieure ou égale à 0.3mm. Le film en question peut être apposé et adhéré directement sur la face avant 14.2 de l'écran à cristaux liquides 14. Alternativement, il peut être tendu sur un cadre est disposé à distance la face avant 14.2 de l'écran à cristaux liquides 14, comme illustré à la figure 2. Le diffuseur de lumière 24 peut également être une plaque, davantage rigide, dans le même matériau que le film évoqué ci-avant. Similairement au film tendu sur un cadre, la plaque peut être disposée à distance la face avant 14.2 de l'écran à cristaux liquides 14, comme illustré à la figure 2.

Le diffuseur de lumière 24 peut être du type circulaire, c'est-à-dire qu'il assure une diffusion identique dans toutes les positions angulaires par rapport à un axe optique des rayons lumineux entrant. Il peut présenter un angle de diffusion circulaire Δ supérieur ou égal à 30°. Dans le cas d'un faisceau lumineux entrant divergeant suivant un angle $\alpha$, l'angle de diffusion $\beta$ à la sortie du diffuseur de lumière 24peut être estimé suivant la relation suivante :

$$\beta = \sqrt{\alpha^2 + \Delta^2}$$

Suivant cette relation, l'angle de diffusion $\beta$ est l'angle total correspondant à la largeur à mi-hauteur de la distribution gaussienne d'une source collimatée après avoir traversé le diffuseur. Cet angle et la relation ci-avant ne dépendent pas de la longueur d'onde lorsque celle-ci est comprise entre 360 et 1600nm.

Le diffuseur de lumière 24 peut être du type elliptique, c'est-à-dire qu'il assure une diffusion différenciée dans deux directions perpendiculaires. Le petit angle de diffusion Δ peut être supérieur ou égal à 10° et/ou inférieur ou égal à 30°. Le grand angle de diffusion Δ peut être supérieur ou égal à 30° et/ou inférieur ou égal à 60°. Dans le cas d'un faisceau lumineux entrant, divergeant suivant un angle $\alpha$, le faisceau sortant présente alors une forme elliptique avec deux angles de diffusion $\beta$ suivant les deux directions perpendiculaires, l'un étant un angle minimum et l'autre étant un angle maximum. Ces angles peuvent être estimés avec la relation ci-avant.

Selon une autre variante de réalisation, le dispositif optique de dépolarisation peut également être une lame à retard quart d'onde ou lame quart d'onde. Une lame quart d'onde, également notée lame λ/4, est une lame à face parallèle qui crée un déphasage de 90°, c'est-à-dire un retard d'un quart de longueur d'onde. Avantageusement, la lame quart d'onde est disposée de sorte que l'angle entre la polarisation de sortie de l'écran à cristaux liquide 14 et l'axe de la lame quart d'onde est de 45°.

La lame quart d'onde permet de passer d'une polarisation rectiligne à une polarisation elliptique voire circulaire. L'image lumineuse ainsi dépolarisée pourra être perçue correctement par un observateur portant des lunettes polarisantes car la polarisation de telles lunettes est linéaire et n'est donc pas susceptible d'absorber une partie substantielle de la lumière polarisée de manière circulaire ou elliptique.

**Revendications**

1. Module de signalisation lumineuse, notamment pour véhicule automobile (2), comprenant :

   - un écran à cristaux liquides (14) avec une face arrière (14.1) et une face avant (14.2) ;
   - un panneau de rétroéclairage (16) disposé en vis-à-vis de la face arrière (14.1) de l'écran à cristaux liquides (14), configuré pour rétroéclairer l'écran à cristaux liquides (14) en vue de former, par transmission au travers dudit écran, une image lumineuse ;

   **caractérisé en ce que** le module comprend, en outre :

   - un dispositif optique de dépolarisation en vis-à-vis de la face avant (14.2) de l'écran à cristaux liquides (14), configuré pour annuler une polarisation rectiligne de l'image lumineuse générée par l'écran à cristaux liquides (14).

2. Module de signalisation lumineuse selon la revendication 1, **caractérisé en ce que** le dispositif optique de dépolarisation est un diffuseur de lumière (24).

3. Module de signalisation lumineuse selon la revendication 2, **caractérisé en ce que** le diffuseur de lumière (24) forme un écran transparent ou translucide avec une face d'entrée (24.1) et une face de sortie (24.2), au moins l'une desdites faces d'entrée (24.1) et face de sortie (24.2)présentant un relief avec des microstructures (24.3).

4. Module de signalisation lumineuse selon la revendication 3, **caractérisé en ce que** la face de l'écran transparent ou translucide présentant un relief avec des microstructures (24.3) est la face de sortie (24.2).

5. Module de signalisation lumineuse selon l'une des revendications 2 à 4, **caractérisé en ce que** le diffuseur de lumière (24) est du type circulaire.

6. Module de signalisation lumineuse selon la revendication 5, **caractérisé en ce que** le diffuseur de lumière (24) présente un angle de diffusion Δ supérieur ou égal à 30°.

7. Module de signalisation lumineuse selon l'une des revendications 2 à 6, **caractérisé en ce que** le diffuseur de lumière (24) est du type elliptique.

**8.** Module de signalisation lumineuse selon la revendication 7, **caractérisé en ce que** le diffuseur de lumière (24) présente un petit angle de diffusion $\Delta$ supérieur ou égal à 10° et/ou un grand angle de diffusion $\Delta$ supérieur ou égal à 60°.

**9.** Module de signalisation lumineuse selon l'une des revendications 2 à 8, **caractérisé en ce que** le diffuseur de lumière (24) comprend un film transparent ou translucide collé sur la face avant (14.2) de l'écran à cristaux liquides (14) ou tendu sur un cadre disposé à distance de la face avant (14.2) de l'écran à cristaux liquides (14).

**10.** Module de signalisation lumineuse selon la revendication 1, **caractérisé en ce que** le dispositif optique de dépolarisation est un lame à retard quart d'onde.

**11.** Dispositif lumineux (4) comprenant :

- un boîtier (10) avec une ouverture ;
- une glace (12) fixée au boîtier (10) de manière à fermer l'ouverture ;
- au moins un module de signalisation lumineuse ;

**caractérisé en ce que**
le ou un des modules de signalisation lumineuse est conforme à l'une des revendications 1 à 10.

**Fig. 1**

**Fig. 2**

Europäisches
Patentamt

European
Patent Office

Office européen
des brevets

# RAPPORT DE RECHERCHE EUROPEENNE

**Numéro de la demande**

EP 19 16 5338

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 205 928 A1 (AUTOMOTIVE LIGHTING REUTLINGEN GMBH [DE]) 16 août 2017 (2017-08-16) | 1,2,5-11 | INV. G02B27/28 F21S41/135 F21S43/20 F21S41/64 |
| A | * alinéas [0028], [0040]; figures 1,2 * | 3,4 | |
| X | EP 3 208 531 A2 (AUTOMOTIVE LIGHTING REUTLINGEN GMBH [DE]) 23 août 2017 (2017-08-23) * alinéa [0006]; figure 1 * | 1 | |
| A | DE 10 2013 113807 A1 (HELLA KGAA HUECK & CO [DE]) 11 juin 2015 (2015-06-11) * alinéa [0031]; figure 1 * | 1-11 | |
| A | DE 710 250 C (PAUL WIEMER DR MED) 8 septembre 1941 (1941-09-08) * page 2, lignes 119,120 * | 1,5,9,10 | |
| A | US 6 101 032 A (OUDERKIRK ANDREW J [US]) 8 août 2000 (2000-08-08) * colonne 2, lignes 4,5 * | 1-11 | |
| | | | DOMAINES TECHNIQUES RECHERCHES (IPC) |
| A | FR 2 846 756 A1 (LE PECHON STEPHANE JEAN MARTIN [FR]) 7 mai 2004 (2004-05-07) * le document en entier * | 1-11 | G02B F21S G02F |

Le présent rapport a été établi pour toutes les revendications

| Lieu de la recherche | Date d'achèvement de la recherche | Examinateur |
|---|---|---|
| Munich | 16 août 2019 | Guénon, Sylvain |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                             
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 16 5338

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-08-2019

| Document brevet cité au rapport de recherche | | Date de publication | Membre(s) de la famille de brevet(s) | | Date de publication |
|---|---|---|---|---|---|
| EP 3205928 | A1 | 16-08-2017 | DE 102016102033 A1 <br> EP 3205928 A1 | | 10-08-2017 <br> 16-08-2017 |
| EP 3208531 | A2 | 23-08-2017 | DE 102016102991 A1 <br> EP 3208531 A2 | | 24-08-2017 <br> 23-08-2017 |
| DE 102013113807 | A1 | 11-06-2015 | AUCUN | | |
| DE 710250 | C | 08-09-1941 | AUCUN | | |
| US 6101032 | A | 08-08-2000 | US 6101032 A <br> US 6396631 B1 <br> US 2003165060 A1 | | 08-08-2000 <br> 28-05-2002 <br> 04-09-2003 |
| FR 2846756 | A1 | 07-05-2004 | AUCUN | | |

EPO FORM P0460

Pour tout renseignement concernant cette annexe : voir Journal Officiel de l'Office européen des brevets, No.12/82

**EP 3 547 009 A1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3026689 A1